(19) Europäisches Patentamt
European Patent Office
Office européen des brevets

(11) **EP 2 182 673 A1**

(12) **EUROPEAN PATENT APPLICATION**

(43) Date of publication:
**05.05.2010 Bulletin 2010/18**

(51) Int Cl.:
*H04L 12/18* *(2006.01)*   *H04L 12/56* *(2006.01)*

(21) Application number: **09173516.7**

(22) Date of filing: **20.10.2009**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **31.10.2008 US 262219**

(71) Applicant: **Hewlett-Packard Development
Company, L.P.
Houston, TX 77070 (US)**

(72) Inventors:
• **Vennelakanti, Ravigopal**
  **Palo Alto, CA 94304-1100 (US)**
• **Gupta, Manish**
  **Palo Alto, CA 94304-1100 (US)**

(74) Representative: **Franks, Adam Peter**
**Hewlett Packard CCF
IP Section - Legal Department
5, Av. Raymond Chanas
38053 Grenoble Cedex 09 (FR)**

(54) **systems and methods for improving multicast communications**

(57)    Systems and methods for improving multicast communications for media services in a network are provided. In this regard, a representative method, among others, includes receiving information related to consumers and at least one routing algorithm associated with the network; generating a multi-hop packet propagation tree based on the receive information related to the consumers and the at least one routing algorithm; receiving a data packet related to the network media services; and encoding the data packet with the multi-hop packet propagation tree.

Node A

Nodes
H, Q, S

| Service Provider **215** | Intermediate Nodes D, F, J, L, M, N, and O | Service Consumer **250** |
|---|---|---|
| Radio **220** | | |
| Podcasts **225** | Service Optimizer **240** | |
| Video Streams **230** | Service Optimizer **242** | Service Optimizer **245** |
| Other Applications **235** | | |

**FIG. 2**

EP 2 182 673 A1

**Description**

## BACKGROUND

There has been much recent attention to improving the service provisioning capabilities over peer-to-peer mobile ad-hoc networks. Mobility solutions today are enabled to render a wide variety of solutions and services. However, services and content delivery on these devices is still centrally orchestrated and controlled. Users do not have the infrastructure for serendipitous discovery of services and content on other devices in close proximity. This limitation curbs the scope for deploying services that aid in instant, on-demand collaboration. Exemplary services that fall in this category include: provisioning a localized news bulletin, traffic forecasting service, identifying medical emergency workers in the area, and governance and safety related services.

The dynamic nature of mobile ad-hoc networks and the enabling protocols have posed several constraints over provisioning media rich applications. For example, a user of the system attempts to provision a media rich service such as live podcast for local consumers of the service. Typically, the podcast is staged on a central server before the podcast is streamed to each consumer even though the consumers of the service could be in a local region. This model is not geared for the dynamic nature of ad hoc networks and services primarily due to the limited processing capabilities, power constraints and a limited bandwidth availability of the participating nodes. Many of the services present an opportunity to optimize the packet delivery protocols to efficiently utilize the available resources. While a number of algorithms have been proposed for optimizing network communication, they do not comprehensively address the requirements of media rich service provisioning over ad-hoc networks.

## BRIEF DESCRIPTION OF THE DRAWINGS

Many aspects of the disclosure can be better understood with reference to the following drawings. The components in the drawings are not necessarily to scale, emphasis instead being placed upon clearly illustrating the principles of the present disclosure. Moreover, in the drawings, like reference numerals designate corresponding parts throughout the several views.

FIG. 1 illustrates an exemplary representation of a network that includes multiple nodes.
FIG. 2 is a block diagram of an exemplary architecture, functionality, and/or operation of the nodes, such as that shown in FIG. 1.
FIG. 3 is a block diagram of a service optimizer, such as that shown in FIG. 2, which facilitates improving multicast communications in an ad-hoc network.
FIG. 4 illustrates an exemplary representation of a multi-hop packet propagation tree that can be used by a service optimizer, such as that shown in FIG. 2.
FIG. 5 is a flow chart that illustrates exemplary architecture, functionality, and/or operation of a service optimizer, such as that shown in FIG. 2.
FIG. 6 is a block diagram that illustrates an embodiment of a generic computer system that can be used to operate the computing components of the system, such as that shown in Fig. 2.

## DETAILED DESCRIPTION

Exemplary systems will be discussed with reference to the figures. Although these systems are described in detail, they are provided for purposes of illustration only and various modifications are feasible. After the exemplary systems are described, examples of flow diagrams of the systems are provided to explain the manner in which services (*e.g.*, radio and podcast) can be provisioned over networks, particularly improving multicast communications and reducing network bandwidth usage for network media services. In general, the disclosed systems and methods include at least one of the following: generating a multi-hop packet propagation tree, packet encoding and provides a fabricated packet injection.

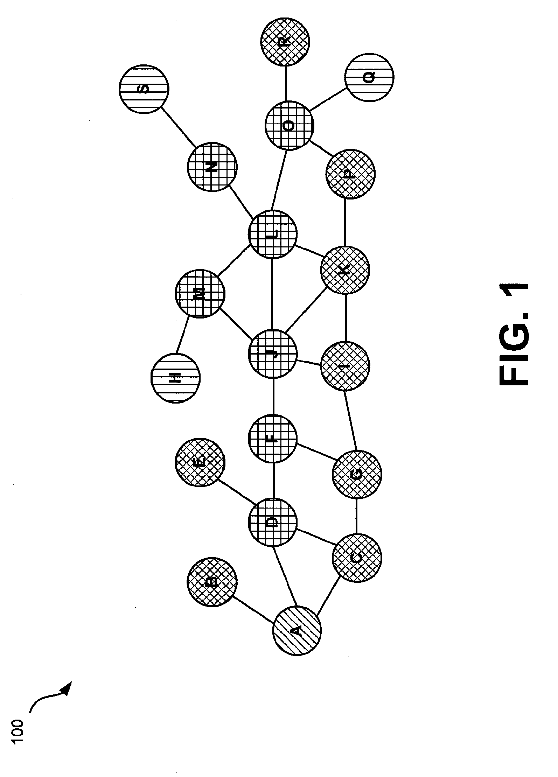

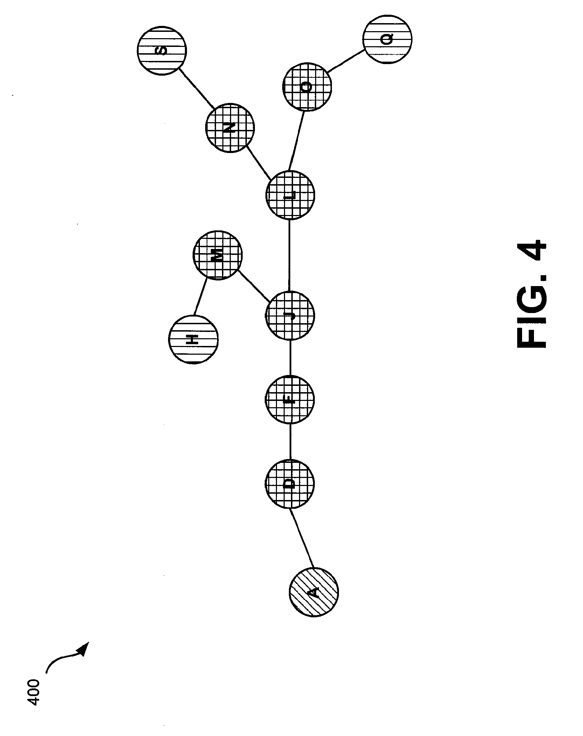

FIG. 1 illustrates an exemplary representation of a network 100 that includes multiple nodes. In this figure, node A is a source node that can broadcast services to destination nodes, which can include any other nodes in the network. The destination nodes are also known as consumer nodes. For example, if the destination nodes are H, Q, and S, nodes D, F, J, L, M, N and O are intermediate nodes and can re-broadcast the packets to the destination nodes. Nodes B, C, E, G, I, K, P, and R are nodes that do not receive the packets because they are not included in a multi-hop packet propagation tree 400 (FIG. 4), which is further described in FIG. 4 based on the nodes in the network 100 (FIG. 1).

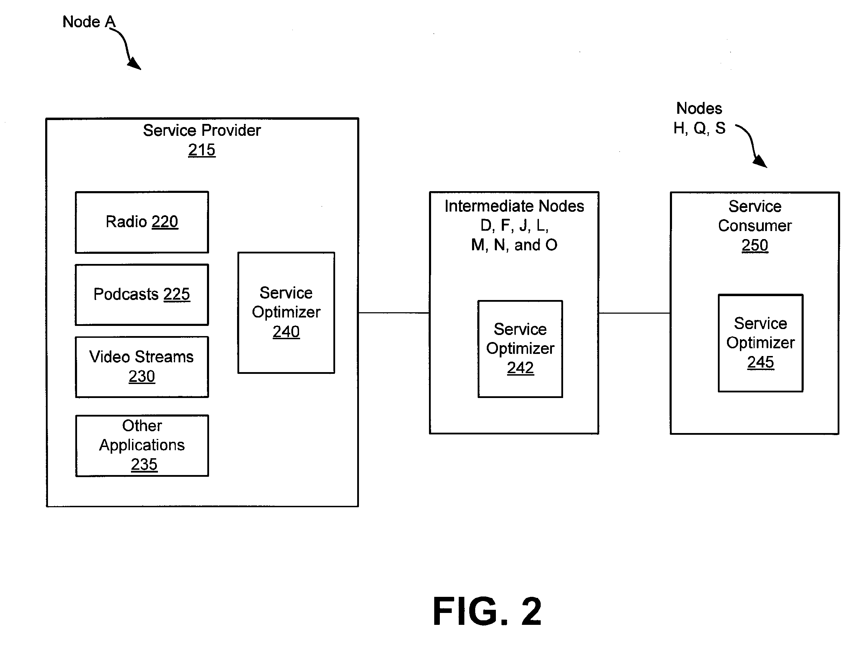

FIG. 2 is a block diagram of an exemplary architecture, functionality, and/or operation of the nodes, such as that shown in FIG. 1. In this example, node A includes a service provider 215 that provides services over the network 100, such as an ad-hoc network. In the ad-hoc network, each node forwards data for other nodes, and so the determination of which nodes forward data is made dynamically based on the network connectivity and packet propagation tree.

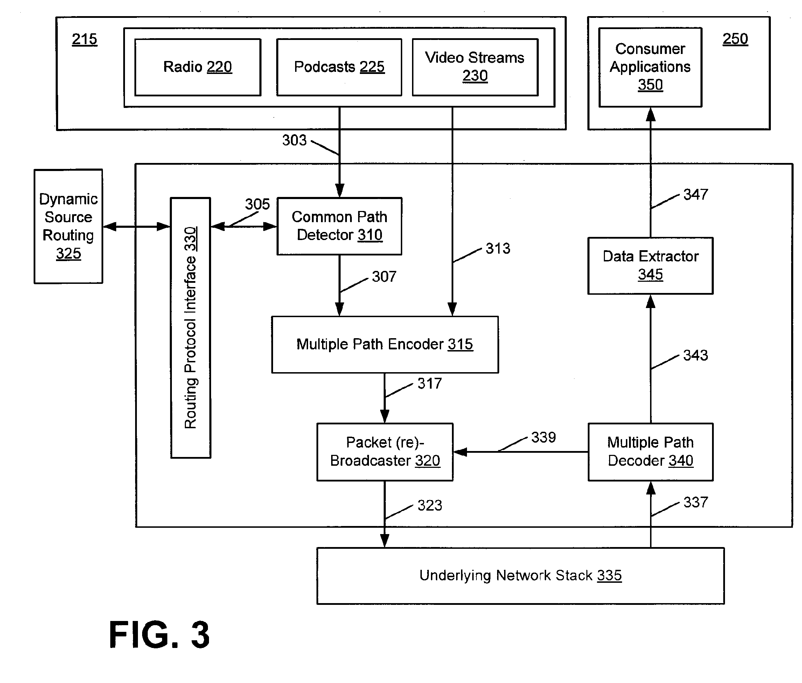

The services include, but are not limited to, providing radio 220, podcasts 225, video streams 230, and other applications 235. The service provider 215 can send the services to, for example, nodes H, Q, and S that are service consumers 250 through intermediate nodes D, F, J, L, M, N, and O. The nodes include service optimizers 240, 242, 245 that facilitate improving multicast communications and reducing network bandwidth usage for network media services. In general, the service optimizer 240, 242, 245 optimizes and encodes the route along with the data payload in the packets and sends them over the network 100. The inter-node communication on the network is generally based on standard protocols and technologies. However, re-broadcasting of the packets for achieving multicasting and the propagation path can be optimized to keep the network traffic to a minimum. The service optimizer 240, 242, 245 is further described in relation to FIG. 3.

FIG. 3 is a block diagram of a service optimizer 240, 242, 245 in (FIG. 2), which facilitates improving multicast communications in an ad-hoc network. The one or more services 220, 225, 230 send via line 303 information related to service consumers to a common path detector 310. In addition, these services 220, 225, 230 also send via line 313 the data packet/payload to the multiple path encoder 315. Such common path detector 310 communicates with a routing protocol interface 330, which provides a standard interface to the various routing algorithms, such as, dynamic source routing 325 for a mobile ad-hoc network. Based on the information related to the routing algorithms provided by the routing protocol interface 330 via line 305, the common path detector 310 can perform at least the following: identify routes to service consumers, determine the common paths amongst those routes and generate a packet propagation tree 400 (FIG. 4) for the packet. In general, the multi-hop packet propagation tree 400 facilitates improving multicast communications in the ad-hoc network by identifying common overlapping sections in the routes to the various destination nodes and transmitting a single packet for multiple nodes along these common overlapping sections. The multi-hop packet propagation tree 400 is further described in relation to FIG. 4.

The dynamic source routing 325 is one of the standard source routing algorithms that is used to explain the disclosed path optimization. However, the disclosed path optimization can easily be adapted to use any of the other source routing algorithms. The routing protocol interface 330 aids in standardizing the protocol interface, and reduces the dependency on specific algorithms.

A multiple path encoder 315 receives via lines 307, 313 a multi-hop packet propagation tree 400 from the common path detector 310 and a data packet from the services 220, 225, 230, respectively. The multiple path encoder 315 can bundle the multi-hop packet propagation tree 400 with the data packet to create an encoded packet, which is sent via line 317 to a packet (re)-broadcaster 320.

If the node is a service provider 215, the packet (re)-broadcaster 320 can receive the data packet from the multiple path encoder 315 and send the data packet via line 323 to be broadcast using an underlying network stack 335. The underlying network stack 335 can work over, for example, standard TCP/IP network stack which is using a wireless communication medium, *e.g.*, Wi-Fi, and supports broadcasts.

The underlying network stack 335, on a node, receives packets (e.g., unicast packets addressed to this node and broadcast packets) from the network (e.g., wi-fi, etc.) and can send the packets to the multiple path decoder 340 for processing. Based on the received data packet from the underlying network stack 335, the multiple path decoder 340 can determine whether the node is a consumer and/or an intermediary node on the path. The multiple path decoder 340 can decode the multi-hop packet propagation tree 400 stored in the packet's header. Based on the multi-hop packet propagation tree 400, the multiple path decoder 340 can determine whether the present node is a consumer or an intermediary node, or both.

Responsive to determining that the node is an intermediary node, the multiple path decoder 340 sends the received data packet via line 339 to the packet (re)-broadcaster 320 for re-broadcasting. If the current node is a consumer, then the multiple path decoder 340 can send the packet via line 343 to a data extractor 345 for further processing. The data extractor 345 receives the data packets from the multiple path decoder 340, extracts the data from the packets and sends the data via line 347 to the consumer applications that receive and process the data packets.

Alternatively or additionally, if the underlying network stack 335 is running over a unicast network then the packet (re)-broadcaster 320 can simulate broadcasting by creating separate packets for each of the next nodes that appear in the packet propagation tree 400 and sending the created packets to the underlying network stack 335.

FIG. 4 illustrates an exemplary representation of a multi-hop packet propagation tree 400 that can be used by a service optimizer 240, 242, 245 (FIG. 2). In this example, node A is a source node that broadcast services to destination nodes H, S and Q. Thus, the multi-hop packet propagation tree includes nodes A, D, F, H, J, L, M, N, O, Q, and S. Nodes J and L are the decision-taking intermediate nodes, where the multi-hop packet propagation tree 400 branches out and the packets get replicated - once for each branch. Nodes D, F, J, L, M, N and O are intermediate nodes and re-broadcast the packets. The multi-hop packet propagation tree facilitates improving multicast communications in the ad-hoc network by identifying common overlapping sections in the routes to the various destination nodes and transmitting a single packet for multiple nodes along these common overlapping sections.

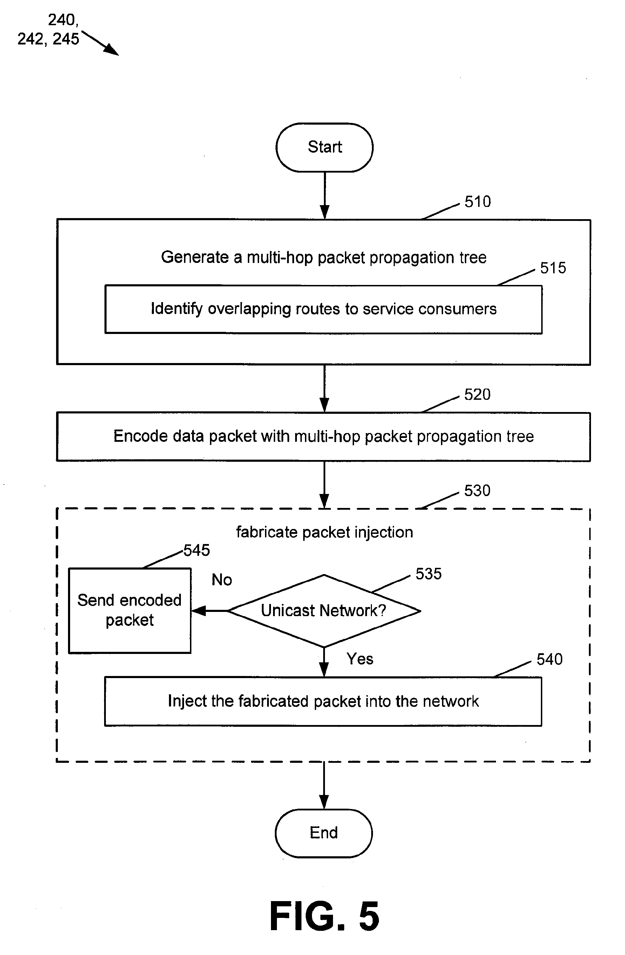

FIG. 5 is a flow chart that illustrates an exemplary architecture, functionality, and/or operation of a service optimizer 240, 242, 245 (FIG. 2). Beginning with block 510, the common path detector 310 of the service optimizer 240, 242, 245 generates a multi-hop packet propagation tree 400. This can be accomplished by identifying overlapping routes to the service consumers, as shown in block 515. A graph is created by overlaying the routes and then a minimum weight spanning tree can be determined for that graph rooted at the source node. The spanning tree can be determined using, for example, the Prim's or Kruskal's algorithms. Each hop in the route (corresponding to the edge in the graph) can be assigned a weight, which can be created as a function of multiple factors (such as, but not limited to, transmission power, distance between nodes, available spare bandwidth between the nodes, packet roundtrip times between nodes, geographical distance between the nodes, spare power availability, and stability of nodes on the network).

If $E_{i,j}$ is an edge between nodes $i$ and $j$, then weight $w_{i,j}$ for the edge can be

$$w_{i,j} = \sum_{x=1}^{m} f_x(P_x(i,j)) \qquad \text{(Eq. 1)}$$

where $P_x$ is a factor (such as transmission power over an edge), contributing to the choice of optimized paths. The weight of each edge is based on m such factors and $f_x$ is a function that translates $P_x$, so that $f_x$ can be linearly combined with other factors.

In block 520, the multiple path encoder 315 of the service optimizer 240, 242, 245 encodes data packet from the services 220, 225, 230 such that the packet delivery protocol can be adapted to the generated multi-hop packet propagation tree 400. The received data packet can contain the entire route that the packet takes from source to destination. However, some data packet may have the data payload without the entire route. For example, the data payload received by multiple path encoder 315 (FIG. 3) from the services 220, 225, 230, along line 313 generally does not contain the entire route. The multiple path encoder 315 bundles the multi-hop packet propagation tree, received from the common path detector 310, with the data packet to create an encoded packet to be broadcast. The received data packet is bundled with the multi-hop packet propagation tree 400 based on the multiple branches and multiple destinations that the packet takes from source to destination. In one embodiment, the data packet can be encoded with the multi-hop packet propagation tree 400 using a mapping table that is based on a linear representation of spanning trees and contains the source and destination Internet Protocol (IP) addresses of each edge of the spanning tree. An exemplary mapping table is shown below in Table 1.

Table 1

| IP Address | Parent IP |
|------------|-----------|
| $IP_A$ | Source |
| $IP_D$ | $IP_A$ |
| $IP_F$ | $IP_D$ |
| $IP_J$ | $IP_F$ |
| $IP_L$ | $IP_J$ |
| $IP_M$ | $IP_J$ |
| $IP_H$ | $IP_M$ |
| $IP_N$ | $IP_L$ |
| $IP_O$ | $IP_L$ |
| $IP_B$ | $IP_N$ |
| $IP_Q$ | $IP_O$ |

Each node that receives the data packet can check by the multiple path decoder 340 if its IP occurs in the source IP column to decide whether to re-broadcast the packet. The nodes whose IP occurs in the destination column are the end consumers and do not need to re-broadcast the data packet.

If the nodes are operating in a unicast network, in block 530, the packet (re)-broadcaster 320 of the service optimizer 240, 242, 245 injects fabricated packets due to the point-to-point nature of the unicast mechanisms. The nodes are generally aware of the nature of the network 100 (e.g., broadcast or unicast) before operating in the network and this is done through out-of-band means. For instance, the out-of-band means could be part of the network settings or can be negotiated when a node tries to join the network. In block 535, the nodes determine whether to operate in a unicast network. Responsive to determining that the nodes operate in a multicast network, the packet (re)-broadcaster 320 sends the encoded packet, as shown in block 545.

Responsive to the nodes determining to operate in a unicast network, the packet (re)-broadcaster 320, in block 540, can inject fabricated packets into the network depending on whether the nodes are intermediate nodes. For example, the nodes can determine whether they are intermediate notes using the mapping table encoded in the packet. When the nodes receive a packet, the nodes determine whether their IP occurs in the source IP column. If the nodes determine that their IP does occur in the source IP column, e.g., once, the nodes send the packet to one other node and so no extra packets are fabricated if it is a unicast network.

If the nodes determine that their IP occurs multiple times in the source IP column, then nodes are intermediate decision-taking nodes, which send the packet to multiple other nodes on a unicast network. The intermediate decision-taking nodes can create separate packets of each of the nodes it has to send the packet to. For example, if a node is an intermediate decision-taking node, the node receives a packet and determines that its IP occurs three (3) times in the source IP column in the mapping table. The node sends the packet to three neighboring nodes whose IP occurs in the destination column. On a unicast network, such a node can create three (3) packets, one for each neighboring nodes and can send them separately. So while intermediate decision-taking node received one packet, the intermediate decision-taking node can fabricate three (3) packets and inject them separately into the network 100.

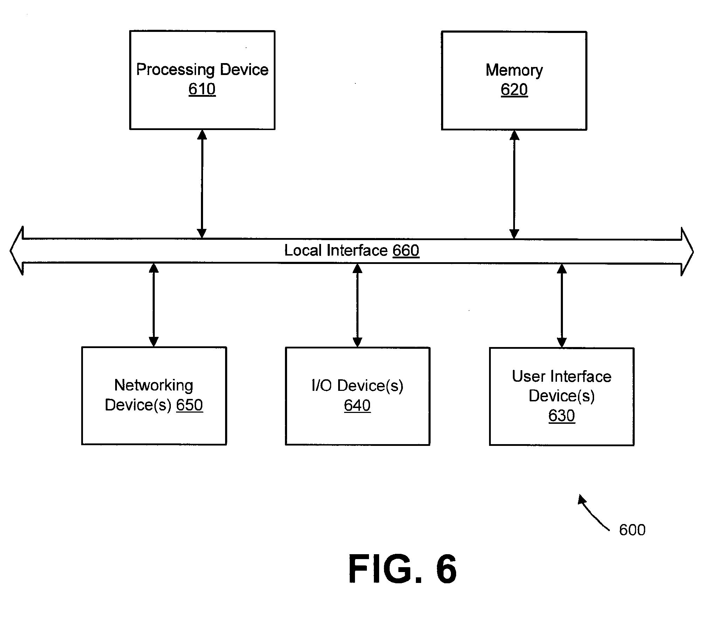

FIG. 6 is a block diagram that illustrates an embodiment of a generic computer system that can be used to operate the computing components of the system, such as that shown in Fig. 2. As indicated in FIG. 6, the generic computer system 600 comprises a processing device 610, memory 620, one or more user interface devices 630, one or more I/O devices 640, and one or more networking devices 650, each of which is connected to a local interface 660.

The processing device 610 can include any custom made or commercially available processor, a central processing unit (CPU) or an auxiliary processor among several processors associated with the computing devices/servers of the nodes (FIG. 1), a semiconductor based microprocessor (in the form of a microchip), or a macroprocessor. The memory 620 can include any one or a combination of volatile memory elements (*e.g.*, random access memory (RAM, such as DRAM, SRAM, *etc.*)) and nonvolatile memory elements (*e.g.*, ROM, hard drive, tape, CDROM, Flash Memory, *etc.*).

The one or more user interface devices 630 comprise those components with which the user (*e.g.*, administrator) can interact with the computing devices/servers of the nodes (FIG. 1). Where the computing components of the network 100 comprise server computers or similar devices, these components can comprise those typically used in conjunction with a PC such as a keyboard and mouse.

The one or more I/O devices 640 comprise components used to facilitate connection of the computing devices of the network 100 to other devices and therefore, for instance, comprise one or more serial, parallel, small system interface (SCSI), universal serial bus (USB), or IEEE 1394 (*e.g.*, Firewire™) connection elements. The networking devices 650 comprise the various components used to transmit and/or receive data over the network, where provided. By way of example, the networking devices 650 include a device that can communicate both inputs and outputs, for instance, a modulator/demodulator (*e.g.*, modem), a radio frequency (RF) or infrared (IR) transceiver, a telephonic interface, a bridge, a router, as well as a network card, *etc.*

The memory 620 of each computing components of the network 100 comprises various programs (in software and/or firmware) including an operating system (O/S) (not shown) and service optimizer 240, 242, 245. The O/S controls the execution of programs, including the service optimizer 240, 242, 245, and provides scheduling, input-output control, file and data management, memory management, and communication control and related services. Operations of the service optimizer 240, 242, 245 have been described above in relation to FIGS. 2-5.

It should be noted that any process descriptions or blocks in flowcharts should be understood as representing modules, segments, or portions of code which include one or more executable instructions for implementing specific logical functions or steps in the process. As would be understood by those of ordinary skill in the art of the software development, alternate embodiments are also included within the scope of the disclosure. In these alternate embodiments, functions may be executed out of order from that shown or discussed, including substantially concurrently or in reverse order, depending on the functionality involved.

This description has been presented for purposes of illustration and description. It is not intended to be exhaustive or to limit the disclosure to the precise forms disclosed. Obvious modifications or variations are possible in light of the above teachings. The embodiments discussed, however, were chosen to illustrate the principles of the disclosure, and its practical application. The disclosure is thus intended to enable one of ordinary skill in the art to use the disclosure, in various embodiments and with various modifications, as is suited to the particular use contemplated. All such modifications and variation are within the scope of this disclosure, as determined by the appended claims when interpreted in accordance with the breadth to which they are fairly and legally entitled.

**Claims**

1. A method for improving multicast communications for media services in a network, the method comprising:

receiving information related to service consumers and at least one routing algorithm associated with the network;
generating a multi-hop packet propagation tree based on the received information related to the consumers and the at least one routing algorithm;
receiving a data packet related to the media services; and
encoding the data packet with the multi-hop packet propagation tree, the multi-hop packet propagation tree being configured to facilitate the multicast communications in the network by having multiple branches and multiple destinations that the data packet takes from source to destination.

2. The method as defined in claim 1, wherein generating the multi-hop packet propagation tree is accomplished by identifying overlapping sections of routes from a service provider to service consumers.

3. The method as defined in claim 2, wherein identifying the overlapping sections of the routes is accomplished by overlaying the routes to create a graph and then determining a spanning tree for the graph rooted at the service provider of the network.

4. The method as defined in claim 3, wherein determining the spanning tree is accomplished by assigning a weight to each hop in the routes corresponding to an edge in the graph, the weight being a function of at least one of the following: transmission power, distance between nodes, available spare bandwidth between the nodes, packet roundtrip times between nodes, geographical distance between the nodes, spare power availability, and stability of nodes on the network.

5. The method as defined in claim 4, wherein encoding the data packet with the multi-hop packet propagation tree is accomplished by using a mapping table that is based on a linear representation of spanning trees and contains the source and destination Internet Protocol (IP) addresses of each edge of the spanning tree.

6. The method as defined in any preceding claim, further comprising:

determining whether the network is a unicast network; and
responsive to determining that the network is a unicast network, fabricating a packet injection for the multiple destinations and inject them into the network to simulate a multicast type behavior.

7. A system for improving multicast communications for media services in a network, the system comprising:

a common path detector that performs the following:

receive information related to consumers and at least one routing algorithm associated with the network, and generate a multi-hop packet propagation tree based on the received information related to the consumers and the at least one routing algorithm; and a multiple path encoder that performs the following:
receive a data packet related to the media services, and
encode the data packet with the multi-hop packet propagation tree, the multi-hop packet propagation tree being configured to facilitate improving the multicast communications in the network by having multiple branches and multiple destinations that the data packet takes from source to destination.

8. The system as defined in claim 7, wherein the common path detector generates the multi-hop packet propagation tree by identifying overlapping sections of the routes from a service provider to service consumers.

9. The system as defined in claim 8, wherein the common path detector identifies the overlapping sections of the routes by overlaying the sections of the routes to create a graph and then determining a spanning tree for the graph rooted at the service provider of the network.

10. The system as defined in claim 9, wherein the common path detector determines the spanning tree by assigning a weight to each hop in the routes corresponding to an edge in the graph, the weight being a function of at least one of the following: transmission power, distance between nodes, available spare bandwidth between the nodes, packet roundtrip times between nodes, geographical distance between the nodes, spare power availability, and stability of nodes on the network.

11. The system as defined in any of claims 7 to 10, wherein the multiple path encoder encodes the data packet with the multi-hop packet propagation tree by using a mapping table that is based on a linear representation of spanning trees and contains the source and destination Internet Protocol (IP) addresses of each edge of the spanning tree.

12. The system as defined in claim 7, wherein the system determines whether the system is operating in a unicast network and responsive to the system determining that the system is operating in a unicast network, the packet (re)-broadcaster fabricates a packet injection for the multiple destinations and inject them into the network to simulate a multicast type behavior.

13. A computer having memory that includes a service optimizer that improves multicast communications for media services in a network, the service optimizer having a set of instructions, the instructions comprising:

   logic to receive information related to consumers and at least one routing algorithm associated with the network;
   logic to generate a multi-hop packet propagation tree based on the received information related to the consumers and the at least one routing algorithm;
   logic to receive a data packet related to the network media services; and
   logic to encode the data packet with the multi-hop packet propagation tree, the multi-hop packet propagation tree being configured to facilitate improving the multicast communications in the network by having multiple branches and multiple destinations that the packet takes from source to destination.

14. The computer as defined in claim 13, wherein the logic to generate the multi-hop packet propagation tree is accomplished by identifying overlapping sections of routes from a service provider to service consumers.

15. The computer as defined in claim 14, wherein identifying the overlapping sections of the routes is accomplished by overlaying the sections of the routes to create a graph and then determining a spanning tree for the graph rooted at the service provider of the network.

100

FIG. 1

Node A

Nodes
H, Q, S

Service Provider
215

Radio 220

Podcasts 225

Video Streams
230

Other
Applications
235

Service
Optimizer
240

Intermediate Nodes
D, F, J, L,
M, N, and O

Service
Optimizer
242

Service
Consumer
250

Service
Optimizer
245

# FIG. 2

EP 2 182 673 A1

FIG. 3

FIG. 4

240,
242, 245

FIG. 5

FIG. 6

Europäisches
Patentamt

European
Patent Office

Office européen
des brevets

# EUROPEAN SEARCH REPORT

Application Number

EP 09 17 3516

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 502 140 B1 (BOIVIE RICHARD H [US]) 31 December 2002 (2002-12-31) * abstract * * column 1, line 11 - line 52 * * column 2, line 35 - line 40 * * column 2, line 51 - column 3, line 42; figure 1 * * column 3, line 43 - column 4, line 17 * * column 4, line 18 - line 62 * ----- | 1-15 | INV. H04L12/18 H04L12/56 |
| X | EP 1 944 925 A (SAMSUNG ELECTRONICS CO LTD [KR]) 16 July 2008 (2008-07-16) * abstract * * paragraph [0001] * * paragraph [0005] - paragraph [0006] * * paragraph [0012] - paragraph [0024] * * paragraph [0028]; figure 1 * * paragraph [0030] - paragraph [0031]; figures 3,4 * ----- | 1-15 | |
| A | WIESELTHIER J E ET AL: "Resource management in energy-limited, bandwidth-limited, transceiver-limited wireless networks for session-based multicasting" COMPUTER NETWORKS, ELSEVIER SCIENCE PUBLISHERS B.V., AMSTERDAM, NL, vol. 39, no. 2, 5 June 2002 (2002-06-05), pages 113-131, XP004352321 ISSN: 1389-1286 * the whole document * ----- | 1-15 | TECHNICAL FIELDS SEARCHED (IPC) H04L |

-/--

The present search report has been drawn up for all claims

| Place of search | Date of completion of the search | Examiner |
|---|---|---|
| The Hague | 13 January 2010 | Poppe, Fabrice |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 09 17 3516

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MAGGIE XIAOYAN CHENG ET AL: "Energy-efficient broadcast and multicast routing in ad hoc wireless networks" PROCEEDINGS OF THE 2003 IEEE INTERNATIONAL PERFORMANCE, COMPUTING, AND COMMUNICATIONS CONFERENCE. (IPCCC), PHOENIX, AZ, APRIL 9 - 11, 2003, 9 April 2003 (2003-04-09), pages 87-94, XP010642209 ISBN: 978-0-7803-7893-3 * the whole document * | 1-15 | |

TECHNICAL FIELDS
SEARCHED       (IPC)

The present search report has been drawn up for all claims

| Place of search | Date of completion of the search | Examiner |
|---|---|---|
| The Hague | 13 January 2010 | Poppe, Fabrice |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 09 17 3516

This annex lists the patent family members relating to the patent documents cited in the above-mentioned European search report.
The members are as contained in the European Patent Office EDP file on
The European Patent Office is in no way liable for these particulars which are merely given for the purpose of information.

13-01-2010

| Patent document cited in search report | | Publication date | Patent family member(s) | | Publication date |
|---|---|---|---|---|---|
| US 6502140 | B1 | 31-12-2002 | NONE | | |
| EP 1944925 | A | 16-07-2008 | KR 20080066622 A | | 16-07-2008 |
| | | | US 2008170513 A1 | | 17-07-2008 |

EPO FORM P0459